# EUROPÄISCHE PATENTSCHRIFT

(11) **EP 0 991 681 B1**
(45) Veröffentlichungstag und Bekanntmachung des Hinweises auf die Patenterteilung: **21.08.2002**
(21) Anmeldenummer: 98934972.5
(22) Anmeldetag: 18.06.1998
(51) Int. Cl.: C08F 271/00, D21H 19/58

(54) **PAPIERSTREICHMASSEN AUF BASIS VON BINDEMITTELN MIT N-VINYLFORMAMIDDERIVATEN**
PAPER COATING MIXTURES BASED ON BINDING AGENTS WITH N-VINYL FORMAMIDE DERIVATIVES
PATES POUR LE COUCHAGE DU PAPIER A BASE DE LIANTS AUX DERIVES DE N-VINYLFORMAMIDE

(30) Priorität: 27.06.1997 DE 19727503
(43) Veröffentlichungstag der Anmeldung: 12.04.2000
(73) Patentinhaber: BASF AKTIENGESELLSCHAFT, 67056 Ludwigshafen (DE)
(72) Erfinder: NEGELE, Anton, D-67146 Deidesheim (DE); LAWRENZ, Dirk, D-67133 Maxdorf (DE)
(86) Internationale Anmeldenummer: EP9803694
(87) Internationale Veröffentlichungsnummer: WO99000437

(56) Entgegenhaltungen:
- EP-A- 0 019 170
- WO-A-95/25759
- GB-A- 1 039 067
- GB-A- 1 409 145
- US-A- 3 468 831
- US-A- 3 677 990
- US-A- 3 923 714

## Beschreibung

Die Erfindung betrifft Papierstreichmassen, enthaltend als Bindemittel ein Copolymerisat aus
10 bis 99,5 Gew.-% Hauptmonomeren a) ausgewählt aus C₁-C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren,
0,5 bis 90 Gew.-%
Monomere b) der Formel 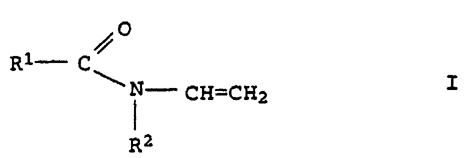 oder 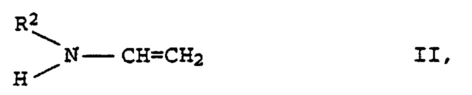 worin R¹ und R² unabhängig voneinander für Wasserstoff oder eine C₁-C₆ Alkylgruppe stehen,
0 bis 10 Gew.-% ethylenisch ungesättigten Säuren, Säureanhydriden oder von b) verschiedenen Amiden c)
0 bis 30 Gew.-% weiteren Monomeren d)

Weiterhin betrifft die Erfindung Papiere, welche mit diesen Papierstreichmassen beschichtet sind und ein Verfahren zum Bedrucken von Papieren.

Papierstreichmassen bestehen im wesentlichen aus einem polymeren Bindemittel und einem weißen Pigment. Durch die Beschichtung mit Papierstreichmassen erhalten Rohpapiere eine glatte, weiße Oberfläche. Insbesondere sollen Papierstreichmassen eine Verbesserung der Bedruckbarkeit bewirken.

Bei den in Papierstreichmassen verwendeten Bindemitteln handelt es sich üblicherweise um Styrol/Butadiencopolymerisate oder auch Acrylpolymere. Entsprechende Papierstreichmassen sind z.B. in WO 97/00776 beschrieben.

Copolymerisate, auch Pfropfcopolymerisate, welche N-Vinylcarbonsäureamide oder N-Vinylamine enthalten, sind z.B. aus WO 95/25759 und der deutschen (unveröffentlichten) Patentanmeldung P 19651243.3 bekannt.

Für den Fachmann besteht die Aufgabe, Papierstreichmassen mit verbesserten Eigenschaften oder alternative Papierstreichmassen mit neuer Rohstoffbasis zur Verfügung zu stellen.

Demgemäß wurden die eingangs definierten Papierstreichmassen und die damit beschichteten Papiere gefunden.

Die erfindungsgemäßen Papierstreichmassen enthalten als Bindemittel ein Copolymerisat, welches aus den Monomeren a) bis d) aufgebaut ist.

Hauptmonomere a) sind ausgewählt aus C₁-C₂₀-Alkyl(meth)acrylaten, Vinylester von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat. Ethylacrylat, 2-Ethylhexylacrylat, n-Butylmethacrylat und iso-Butylmethacrylat.

Insbesondere sind auch Mischungen der (Meth)acrylsäurealkylester geeignet.

Vinylester von Carbonsäuren mit 1 bis 20 C-Atomen sind z.B. Vinyllauraet, -stearat, Vinylpropionat, Versaticsäurevinylester und Vinylacetat.

Als vinylaromatische Verbindungen kommen Vinyltoluol α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren und mit einer Doppelbindung z.B. Ethylen genannt.

Vorzugsweise handelt es sich bei Monomeren a) um folgende Monomere oder ein Gemisch folgender Monomere:
Styrol, C₁-C₁₀-Alkyl(meth)acrylate, insbesondere n-Butylacrylat und (Meth)acrylnitril, insbesondere Acrylnitril.

Bevorzugte Monomere c) sind ethylenisch ungesättigte Säuren, z.B. Sulfonsäuren oder insbesondere Carbonsäuren. Genannt seien: (Meth)acrylsäure oder Itaconsäure, Dicarbonsäuren und deren Anhydride oder Halbester, z.B. Maleinsäure, Fumarsäure und Maleinsäureanhydrid, Acrylamidopropansulfonsäure, Vinylsulfonsäure, Sulfoethyl- bzw. Sulfopropyl(meth)acrylat bzw. deren Salze, insbesondere Ammonium- oder Alkalisalze und (Meth)acrylamid, N-Vinylpyrrolidon, N-Vinylcaprolactam, N-vinyl-imidazol.

Als weitere Monomere d) seien z.B. Glycidylacrylat, Glycidylmethacrylat, Diallyldimethylammoniumchlorid und insbesondere Hydroxylgruppen enthaltende Monomere, z.B. C₁-C₁₅ Hydroxyalkyl(meth)acrylate genannt.

Monomere b) sind solche der Formel 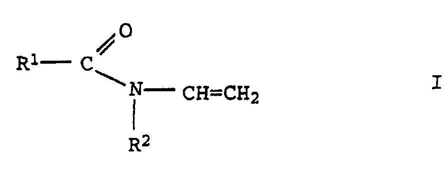 oder 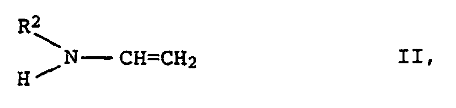 worin R¹ und R² unabhängig voneinander für Wasserstoff oder eine C₁-C₆ Alkylgruppe stehen.

Monomere der Formel I sind z.B. N-Vinyl-N-methylformamid, N-Vinylacetamid, N-Vinyl-N-methylacetamid, N-Vinylpropionamid, N-Vinyl-N-methylpropionamid, N-Vinyl-butyramid und vorzugsweise N-Vinylformamid.

Monomere der Formel II können durch Hydrolyse mit Säuren oder Basen unter Abspaltung von C₁-C₇-Carbonsäuren oder deren Salze aus Monomeren I erhalten werden.

Soweit ein Gehalt von Monomeren II gewünscht ist, werden vorteilhafterweise zunächst Monomere I copolymerisiert und dann die Struktureinheiten der Monomeren I durch Hydrolyse im gewünschten Ausmaß in Struktureinheiten der Monomeren II überführt.

Das Copolymerisat besteht bevorzugt aus
10-80 Gew.-%, besonders bevorzugt 10-40 Gew.-% Monomere a)
10-90 Gew.-%, besonders bevorzugt 60-90 Gew.-% Monomere b)
0-10 Gew.-%, besonders bevorzugt 0-5 Gew.-% Monomere c)
0-10 Gew.-%, besonders bevorzugt 0-5 Gew.-% Monomere d)

Die Monomeren können vorzugsweise radikalisch oder soweit möglich auch anionisch bzw. kationisch polymerisiert werden. Sowohl die radikalische als auch die anionische Polymerisation sind als übliche Polymerisationsmethoden dem Fachmann bekannt.

Die radikalische Polymerisation kann z.B. in Lösung, z.B. in Wasser oder einem organischen Lösungsmittels (Lösungspolymerisation) in wäßriger Dispersion (Emulsionspolymerisation, Suspensionspolymerisation) oder in Masse, d.h. im wesentlichen in Abwesenheit von Wasser oder organischen Lösungsmitteln (Massepolymerisation) durchgeführt werden.

Die Emulsionspolymerisation kann z.B. diskontinuierlich, mit oder ohne Verwendung von Saatlatices, unter Vorlage aller oder einzelner Bestandteile des Reaktionsgemisches, oder halbkontinuierlich bevorzugt unter teilweiser Vorlage und Nachdosierung der oder einzelner Bestandteile des Reaktionsgemisches, oder nach dem Dosierverfahren ohne Vorlage durchgeführt werden. Ebenso kann die Polymerisation stufenweise durchgeführt werden, wobei sich die Zusammensetzung der einzelnen Stufen unterscheiden und Monomere a) z.B. in einer Stufe, d.h. einer Phase angereichert werden können.

Die Monomeren können bei der Emulsionspolymerisation wie üblich in Gegenwart eines wasserlöslichen Initiators und eines Emulgators bei vorzugsweise 10 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen und deren sulfatierte Derivate in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 40 bis 80 Gew.-%, besonders bevorzugt 45 bis 75 Gew.-%. Hohe Polymerfeststoffgehalte können z.B. nach Verfahren, welche in der deutschen Patentanmeldung P 4 307 683.1 oder der EP 37 923 beschrieben sind, eingestellt werden.

Die Lösungspolymerisation kann kontinuierlich, diskontinuierlich als Batch-Verfahren oder vorzugsweise halbkontinuierlich im Zulaufverfahren durchgeführt werden. Im letzteren Fall wird ein Teil der Monomeren vorgelegt, auf die Polymerisationstemperatur erhitzt und der Rest der Monomeren kontinuierlich zugeführt.

Als Lösungsmittel für die radikalische Lösungspolymerisation, kann Wasser, Alkohole wie z.B. i-Butanol, i-Propanol, Aromaten wie Toluol oder Xylol, Ether wie Dioxan oder Tetrahydrofuran, Ketone wie Aceton, Cyclohexanon oder Ester wie Ethylacetat oder n-Butylacetat verwendet werden.

Als bevorzugte Initiatoren sind Dibenzoylperoxid, tert.-Butylperpivalat, tert.-Butylper-2-ethylhexanoat, tert.-Amyl-2-ethylhexylperoxid, Di-tert.-butylperoxid, tert.-Butylhydroperoxid, Cumolhydroperoxid, Dilauroylperoxid, Didecanoylperoxid, Methylethylketonperoxid, 2,2'-Azobis-(2,4-dimethylvaleronitril), 2,2'-Azobis-(2,3-dimethylbutyronitril) und 2,2'-Azobisisobutyronitril zu nennen.

Bei der Massepolymerisation wird im allgemeinen ein Teil des Polymerisationsansatzes vorgelegt, auf die Polymerisationstemperatur erhitzt, wonach anschließend der Rest kontinuierlich zugeführt wird.

Das Polymerisat wird in Abhängigkeit von der gewählten Polymerisationsmethode in Form einer wäßrigen Dispersion des Polymerisats, einer Lösung in einem organischen Lösungsmittel oder oder vorzugsweise in Wasser im wesentlichen wasser- und lösemittelfrei erhalten.

Die Glasübergangstemperatur des Polymerisats beträgt vorzugsweise 20 bis 200°C, besonders bevorzugt 70 bis 140°C.

Die Glasübergangstemperatur des Polymerisats läßt sich nach üblichen Methoden wie Differentialthermoanalyse oder Differential Scanning Calorimetrie (s. z.B. ASTM 3418/82, sog. "midpoint temperature") bestimmen.

Bevorzugte Copolymerisate sind Pfropfcopolymerisate, welche durch Copolymerisation von Monomeren in Gegenwart einer Pfropfgrundlage erhältlich sind. Die Pfropfgrundlage kann durch Polymerisation von Monomeren a) bis d) gemäß den vorstehenden Polymerisationsverfahren vorzugsweise durch Lösungspolymerisation, bevorzugt in Wasser, erhalten werden. Die Pfropfgrundlage enthält vorzugsweise mindestens 5 Gew.-%, besonders bevorzugt mindestens 40 Gew.-% und ganz besonders mindestens bevorzugt 90 Gew.-% Monomere b) der Formel I oder II bzw. der Formel I und II.

Darüber hinaus enthält die Pfropfgrundlage vorzugsweise 0-60 Gew.-% insbesondere 0-10 Gew.-% Monomere a), c) und/oder d).

Der Anteil der Pfropfgrundlage am gesamten Copolymerisat beträgt vorzugsweise 10 bis 90 Gew.-%, besonders bevorzugt 60 bis 90 Gew.-%, bezogen auf das Copolymerisat

Die Pfropfgrundlage allein besitzt K-Werte von vorzugsweise mindestens 7 bis 300, insbesondere 10 bis 250. Die K-Werte werden bestimmt nach H. Fikentscher, Cellulose-Chemie, Band 13, 58 bis 64 und 71 bis 74 (1932) in wäßriger Lösung bei 25°C. Aus Homo- und Copolymerisaten von Monomeren b) der Formel I erhält man durch teilweise Abspaltung der Gruppe 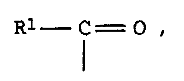 in der R¹ = H oder C₁- bis C₆-Alkyl ist, unter Bildung von Amin- bzw. Ammoniumgruppen als Pfropfgrundlage zu verwendende gegebenenfalls hydrolysierte Copolymerisate, die Einheiten der Monomeren I und II oder nur II aufweisen. Wenn hydrolysierte Copolymerisate der N-Vinylcarbonsäureamide als Pfropfgrundlage eingesetzt werden, können auch die anderen eingesetzten Comonomeren je nach gewählter Hydrolysebedingung chemisch verändert werden, z.B. entstehen aus Vinylacetat-Einheiten Vinylalkohol-Einheiten und aus Acrylsäuremethylester-Einheiten Acrylsäure-Einheiten und aus Acrylnitril-Einheiten Acrylamid- bzw. Acrylsäure-Einheiten.

Als Hydrolysemittel eignen sich Mineralsäuren, wie Halogenwasserstoffe, die gasförmig oder in wäßriger Lösung eingesetzt werden können. Vorzugsweise verwendet man Salzsäure, Schwefelsäure, Salpetersäure und Phosphonsäure sowie organische Säuren, wie C₁- bis C₅-Carbonsäuren und aliphatische oder aromatische Sulfonsäuren. Pro Formylgruppenäquivalent, das aus den einpolymerisierten Einheiten I abgespalten werden soll, kann man z.B. 0,05 bis 2, vorzugsweise 1 bis 1,5 Moläquivalente einer Säure einsetzen.

Die Hydrolyse der einpolymerisierten Einheiten der Struktur I kann auch mit Hilfe von Basen vorgenommen werden, z.B. von Metallhydroxiden, insbesondere von Alkalimetall- und Erdalkalimetallhydroxiden. Vorzugsweise verwendet man Natriumhydroxid oder Kaliumhydroxid. Die Hydrolyse kann gegebenenfalls auch in Gegenwart von Ammoniak oder Aminen durchgeführt werden. Die Vinylamineinheiten können in Form der freien Amine oder auch als Ammoniumsalze zur Pfropfung eingesetzt werden.

Zur Herstellung der Pfropfpolymerisate werden die zu pfropfenden Monomeren in Gegenwart der Pfropfgrundlage radikalisch polymerisiert. Eine bevorzugte Art der Herstellung der Pfropfcopolymerisate ist die Lösungspolymerisation, wobei die als Pfropfgrundlage eingesetzten Polymerisate, vorzugsweise in gelöster Form vorliegen. Die aufzupfropfenden Monomeren werden dann der Polymerlösung entweder langsam oder auf einmal zugesetzt und in der Polymerlösung suspendiert. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, sowie Mischungen der genannten inerten Lösemittel. Bevorzugt ist die Lösungspolymerisation in Wasser oder in Mischungen aus Wasser und Alkoholen. Die Pfropfcopolymerisation kann kontinuierlich oder diskontinuierlich durchgeführt werden.

Die Pfropfcopolymerisation kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Photoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Pfropfpolymerisate mit niedrigem K-Wert herzustellen, wird die Pfropfcopolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Üblicherweise wird die Pfropfpolymerisation bei Temperaturen von 20 bis 200°C durchgeführt, wobei man gegebenenfalls unter erhöhtem Druck arbeitet. Der bevorzugte Temperaturbereich liegt jedoch bei 30 bis 120°C.

Eine bevorzugte Herstellungsart für die Pfropfpolymerisate ist das Eintopfverfahren, wobei in einem Reaktor zunächst die Pfropfgrundlage hergestellt, dann sofort die Pfropfkomponente auf einmal zugesetzt und dann polymerisiert oder während der Polymerisation nach Fortschritt der Reaktion zudosiert wird.

Die Pfropfpolymerisate besitzen vorzugsweise K-Werte von mindestens 7 bis 300, bestimmt nach H. Fikentscher in 5 gew.-%iger wäßriger Lösung bei 25°C und pH 7. Die K-Werte der Pfropfpolymerisate liegen insbesondere in dem Bereich von 10 bis 200. Den angegebenen K-Werten entsprechen Molmassen M_{w} von 200 bis 10 Millionen. Die Molmassen M_{w} betragen vorzugsweise 500 bis 5 Millionen. Die Molmassen M_{w} wurden mit Hilfe der Lichtstreuung bestimmt.

Die erfindungsgemäße Papierstreichmassen enthalten das Copolymerisat, insbesondere Pfropfcopolymerisat als Bindemittel, vorzugsweise in Mengen von 1 bis 50, insbesondere 5 bis 20 Gew.-%, bezogen auf den Pigmentgehalt der Papierstreichmassen (Angabe bezieht sich auf Polymer als solches, d. h. fest, ohne Lösemittel).

Üblicherweise stellen Pigmente die Hauptkomponente der Papierstreichmassen dar. Häufig verwendete Pigmente sind beispielsweise Bariumsulfat, Calciumcarbonat, Calciumsulfoaluminat, Kaolin, Talkum, Titandioxid, Zinkoxid, Kreide oder Streichclay.

Neben dem Bindemittel und den Pigmenten können die Papierstreichmassen weitere Zusatzstoffe enthalten.

Die Papierstreichmassen können z.B. Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentmenge, enthalten sind.

Außerdem können die Papierstreichmassen sogenannte "Co-Binder" enthalten. Als natürliche Cobinder seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder, z.B. auf Vinylacetat- oder Acrylatbasis, verwendet werden.

Diese können z.B. in Mengen von 0,1 bis 10 Gew.-%, bezogen auf die Pigmentmenge enthalten sein.

Zur Herstellung der Papierstreichmasse werden die Bestandteile in bekannter Weise gemischt, wobei das Polymere im allgemeinen in Form einer wäßrigen Dispersion, Suspersion oder Lösung verwendet wird.

Der Gehalt an Wasser in der Papierstreichmasse wird üblicherweise auf 25 bis 75 Gew.-%, bezogen auf die Papierstreichmasse, eingestellt.

Die Papierstreichmasse kann nach üblichen Verfahren auf die zu beschichtenden Papiere aufgebracht werden (vgl. Ullmann's Encyclopädie der Technischen Chemie, 4. Auflage, Bd. 17, S. 603 ff).

Die mit den erfindungsgemäßen Papierstreichmassen beschichteten Papiere weisen eine hohe Festigkeit des Strichs (Haftung der Papierstreichmasse) auf. Dadurch sind sie besonders für den Offsetdruck geeignet, bei dem hohe Zugkräfte durch die Druckfarbe das beschichtete Papier beanspruchen.

Vorteilhaft gegenüber herkömmlichen Bindemitteln ist besonders die Möglichkeit, trotz der hohen Strichfestigkeit auch eine gute Blisterfestigkeit, d.h. Widerstand gegen Blasenbildung, zu erreichen. Üblicherweise besteht zwischen den Eigenschaften "Strichfestigkeit" (auch als Bindekraft bezeichnet) und "Blisterfestigkeit" ein Gegensatz, der mit den erfindungsgemäßen Streichmassen teilweise aufgehoben wird.

Die mit den erfindungsgemäßen Papierstreichmassen beschichteten Papiere zeigen eine gute Bedruckbarkeit. Die Papiere sind insbesondere auch für Offsetdruckverfahren geeignet.

### Vorteilhaft ist auch:

### Beispiele

### 1. Polymersynthese

### Pfropfgrundlage A

In einem Reaktor werden 1079,5 g Wasser, 6,0 g 85-%ige Phosphorsäure und 5,2 g 50-%ige Natronlauge vorgelegt. Der pH-Wert beträgt 6,4. Nun wird im schwachen Stickstoffstrom auf 70°C erhitzt und Vakuum angelegt (310 mbar). Innerhalb von 3 Stunden werden 709,4 g N-Vinylformamid und eine Lösung von 5,0 g Mercaptoethanol in 76,5 g Wasser und binnen 4 Stunden eine Lösung von 5,0 g 2,2'-Azobis(2-amidinopropan)-dihydrochlorid in 127,5 g Wasser bei 70°C gleichmäßig zudosiert. Anschließend wird 2 Stunden nachpolymerisiert, danach wird 1 Stunde mit 0,5 g 2,2'-Azobis(2-amidinoprpan)dihydrochlorid auspolymerisiert. Während der gesamten Laufzeit wird das Kondensat (292,5 g) abdestilliert. Die Lösung besitzt einen Feststoffgehalt von 42,5 Gew.-%. Der K-Wert des Polymeren, gemessen 1 %ig in Wasser, beträgt 38,9.

### Pfropfgrundlage B

In einem Reaktor werden 1558 g Wasser, 7,82 g 75-%ige Phosphorsäure und 11,7 g 25-%ige Natronlauge vorgelegt. Der pH-Wert beträgt 6,5. Nun wird im schwachen Stickstoffstrom auf 75°C erhitzt und Vakuum angelegt (350 mbar). Innerhalb von 3 Stunden werden 367 g N-Vinylformamid und binnen 4,5 Stunden eine Lösung von 1,44 g 2,2'-Azobis(2-amidinopropan)dihydrochlorid in 180 g Wasser gleichmäßig zudosiert. Anschließend wird bei 75°C für 2 Stunden nachpolymerisiert. Während der gesamten Laufzeit wird das am Rückflußkühler anfallende Kondensat (351 g) abdestilliert. Die Lösung besitzt einen Feststoffgehalt von 16,8 Gew.-%. Der K-Wert des Polymeren, gemessen 1 %-ig in Wasser, beträgt 91,6.

### Beispiel 1

In einem gerührten Reaktor mit Stickstoffzuführung, Rückflußkühler und Dosiervorrichtung werden 689,4 g der 42,5 %igen Lösung von Pfropfgrundlage A im schwachen Stickstoffstrom auf 85°C erhitzt. Bei 85°C werden nun innerhalb von 3 Stunden eine Mischung von 101,6 g n-Butylacrylat, 21,75 g Styrol und 14,52 g Acrylnitril (insg. 137,87 = 20 % bez auf Polymer) und binnen 4 Stunden 2,76 g 2,2'-Azobis(2-amidinopropan)dihydrochlorid, gelöst in 100 g Wasser, gleichmäßig zudosiert. Anschließend wird noch 2 Stunden mit 0,6 g 2,2'-Azobis(2-amidinopropan)dihydrochlorid nachpolymerisiert. Die Lösung besitzt einen Feststoffgehalt von 44,6 %. Der T_{G}-Wert des Pfropfpolymeren beträgt 75°C.

### Beispiel 2

In einem gerührten Reaktor mit Stickstoffzuführung, Rückflußkühler und Dosiervorrichtung werden 941 g der 16,8 %igen Lösung von Pfropfgrundlage B im schwachen Stickstoffstrom auf 85°C erhitzt. Bei 85°C werden nun innerhalb von 3 Stunden eine Mischung von 23,58 g n-Butylacrylat, 5,05 g Styrol und 3,37 g Acrylnitril (ing. 32 g = 20 % bez. auf Polymer) und binnen 4 Stunden 0,64 g 2,2'-Azobis(2-amidinopropan)dihydrochlorid gelöst in 100 g Wasser, gleichmäßig zudosiert. anschließend wird noch 2 Stunden mit 0,3 g 2,2'f-Azobis(2-amidinopropan)dihydrochlorid nachpolymerisiert. Die Lösung besitzt einen Feststoffgehalt von 18,1 %. Der T_{G}-Wert des Pfropfpolymeren beträgt 106°C.

### 2. Papierstreichmassen

Papierstreichmassen wurden gemäß nachfolgender Rezeptur hergestellt (Tle sind Gewichtsteile).

| | |
|---|---|
| 70 Tle. | feinteilige Kreide |
| 30 Tle. | feinteiliger Clay |
| 0,5 Tle. | Carboxymethylcellulose |
| 0,4 Tle. | eines Natriumsalzes einer Polyacrylsäure mit einem Molekulargewicht von 4000 (Polysalz von BASF) |
| 10 Tle. | Bindemittel, fest (Beispiel 1 und 2, Vergleich 1 und 2) |
| Feststoffgehalt | 70 % |
| pH-Wert | 8,5 bis 9 (eingestellt mit NaOH) |

Als Vergleich dienten handelsübliche Papierstreichbinder (Polymerdispersionen), zum einen auf Basis Styrol/Butylacrylat (Acronal® S 360 D), zum anderen auf Basis Styrol/Butadien (Styronal® PR 8717). Diese sind im Handel erhältliche Verkaufsprodukte der BASF AG.

Diese Papierstreichmasse wurde auf die folgende Weise weiterverarbeitet:

### Beschichtung:

Als Rohpapier wurde ein holzfreies Streichrohpapier mit einem Flächengewicht von 70 g/m² verwendet. Der Auftrag der Streichmasse erfolgt beidseitig mit jeweils 10 g/m² auf einer Laborstreichmaschine (Auftragsverfahren: Walze, Dosierverfahren: Blade).
Die Papierbahn wurde mittels einer IR-Trockeneinheit auf eine Papierfeuchte von 5,0 % eingestellt.

Die Papiere, die mit der Laborstreichmaschine gestrichen (mit Papierstreichmasse beschichtet) wurden, wurden zu Bögen zugeschnitten. Mittels eines Tisch-Laborkalander K8/2 (beiheizbar) der Fa. Kleinewefers, Krefeld, wurden die Prüfbögen nach Klimatisierung (15 Stunden bei Normalklima DIN 50 014-23/50-2 (Temperatur 23°C, Luftfeuchte 50 %)) bei einer Temperatur von 60°C kalandriert.

Der Liniendruck zwischen den Walzen betrug 200 daN/cm Papierbreite, die Geschwindigkeit 10 m/min (Standardeinstellung).

Der Vorgang wurde viermal wiederholt (Simulation: 4 Nips)

### 3. Anwendungstechnische Prüfungen

### a) Bestimmungen der Trockenrupffestigkeit mit dem IGT-Probedruckgerät (IGT trocken)

Die Teststreifen wurden mit zunehmender Geschwindigkeit im Offsetverfahren bedruckt. Die maximale Druckgeschwindigkeit betrug 200 cm/s. Der Farbauftrag erfolgt bei einem Liniendruck von 35 kp/cm.

Bei der sogenannten Punktauswertung wird, vom ersten Rupfpunkt (also dem ersten Ausrißpunkt aus der Papierstreichmasse) ausgehend, der zehnte Rupfpunkt ausgezählt.

Die Trockenrupffestigkeit wird in cm/s, also der beim zehnten Rupfpunkt anliegenden Druckgeschwindigkeit angegeben.

### b) Rupffestigkeit bei Mehrfachbedruckung (Offsettest)

Das Bedrucken der Teststreifen wurde mit konstanter Geschwindigkeit (1 m/s) durchgeführt und erfolgte bei einem Liniendruck von 200 N/cm.

Der Druckvorgang wird nach 30 s wiederholt. Als Rupffestigkeit wird die Anzahl von Durchgängen bis Rupfen auftritt angegeben.

### B) Bestimmung der Blisterneigung

Die beidseitig gestrichenen Papiere wurden nach Klimatisierung (15 h bei einer Luftfeuchtigkeit von 50 %+3 % und 23°C+1°C) zu Streifen von 10 cm Länge und 5 cm Breite in Laufrichtung zugeschnitten.

Die Probenstreifen werden einzeln ca. 5 s in heißes Siliconöl eingetaucht. Ist bei diesem Vorgang kein Blistering (Blasenbildung) durch das schlagartige Verdampfen der Restfeuchte zu beobachten, wiederholt man die Prüfung bei zunächst 180°C dann 200°C, 220°C und letztendlich 240°C. Die Testauswertung erfolgt durch eine Beurteilung mit Notenvergabe von 1 - 6. Je nach Beschaffenheit gibt man die Note 1 für blasenfreie Probenstreifen und die Note 6 für sehr starke Blasenbildung.

### Ergebnis der Prüfungen

| | IGT trocken [cm] | Offsettest [Zahl der Durchgänge] | Blister [Benotung] bei 200°C |
|---|---|---|---|
| Beispiel 1 | 35 | 2 | 1 |
| Beispiel 2 | 110 | 6 | 3 |
| Vergleichsbeispiel 1 Acronal S 360 D | 70 | 6 | 6 |
| Vergleichsbeispiel 2 Styronal PR 8717 | 75 | 5 | 6 |

Wie aus der Tabelle ersichtlich, lassen sich mit den erfindungsgemäßen Zusammensetzungen Eigenschaften erreichen und zum Teil übertreffen, wie sie handelsübliche Papierstreichbinder auf Basis Styrol/Butadien und Styrol/Butylacrylat aufweisen.

## Patentansprüche

1. Papierstreichmassen, enthaltend als Bindemittel ein Copolymerisat aus
10 bis 99,5 Gew.-% Hauptmonomeren a) ausgewählt aus C₁-C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren,
0,5 bis 90 Gew.-%
Monomere b) der Formel 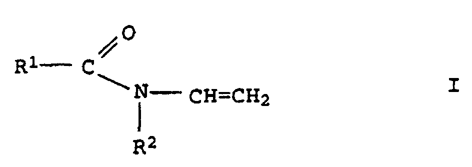 oder 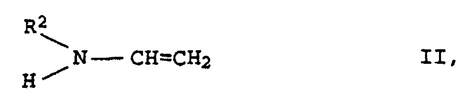 worin R¹ und R² unabhängig voneinander für Wasserstoff oder eine C₁-C₆ Alkylgruppe stehen,
0 bis 10 Gew.-% ethylenisch ungesättigten Säuren, Säureanhydriden oder von b) verschiedenen Amiden c)
0 bis 30 Gew.-% weiteren Monomeren d)

2. Papierstreichmassen gemäß Anspruch 1, **dadurch gekennzeichnet, daß** es sich bei dem Copolymerisat um ein Pfropfcopolymerisat handelt, wobei die polymere Pfropfgrundlage zu mindestens 5 Gew.-% aus Monomeren b) besteht

3. Papierstreichmassen gemäß Anspruch 1 oder 2, **dadurch gekennzeichnet, daß** der Gewichtsanteil der Pfropfgrundlage am gesamten Copolymerisat 10 bis 90 Gew.-%, bezogen auf das Copolymerisat ist.

4. Papierstreichmassen gemäß Ansprüchen 2 oder 3, **dadurch gekennzeichnet, daß** das Pfropfcopolymerisat durch radikalische Polymerisation der Monomeren a) und gegebenenfalls b), c) und d) in Gegenwart der Pfropfgrundlage hergestellt wird.

5. Papierstreichmassen gemäß einem der Ansprüche 1 bis 4, **dadurch gekennzeichnet, daß** das Copolymerisat insgesamt aufgebaut ist aus:
10-80 Gew.-% Monomere a)
10-90 Gew.-% Monomere b)
0-10 Gew.-% Monomere c)
0-10 Gew.-% Monomere d)

6. Papierstreichmassen gemäß einem der Ansprüche 1 bis 5, **dadurch gekennzeichnet, daß** es sich bei Monomeren a) um Styrol, Acrylnitril, oder n-Butylacrylat handelt.

7. Papiere, beschichtet mit einer Papierstreichmasse gemäß einem der Ansprüche 1 bis 6

8. Verfahren zum Bedrucken von Papieren, **dadurch gekennzeichnet, daß** Papiere gemäß Anspruch 7 bedruckt werden.

9. Verfahren gemäß Anspruch 8, **dadurch gekennzeichnet, daß** es sich um ein Offsetdruckverfahren handelt.

## Claims

1. A paper coating slip comprising as its binder a copolymer of
from 10 to 99.5% by weight of principal monomers a) selected from C₁-C₂₀ alkyl (meth)acrylates, vinyl esters of carboxylic acids having up to 20 carbon atoms, vinylaromatic compounds having up to 20 carbon atoms, ethylenically unsaturated nitriles, vinyl halides, vinyl ethers or allyl ethers of alcohols having 1 to 10 carbon atoms, aliphatic hydrocarbons having 2 to 8 carbon atoms and 1 or 2 double bonds, or mixtures of these monomers;
from 0.5 to 90% by weight of
monomers b) of the formula 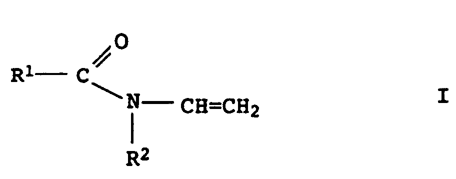 or 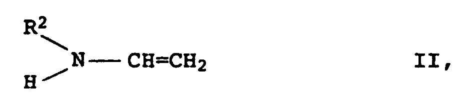 where R¹ and R² independently of one another are hydrogen or a C₁-C₆ alkyl group;
from 0 to 10% by weight of ethylenically unsaturated acids, acid anhydrides or non-b) amides, c);
from 0 to 30% by weight of further monomers d).

2. A paper coating slip as claimed in claim 1, wherein said copolymer is a graft copolymer whose polymeric graft base consists to the extent of at least 5% by weight of monomers b).

3. A paper coating slip as claimed in claim 1 or 2, wherein the weight fraction of the graft base as a proportion of the overall copolymer is from 10 to 90% by weight, based on said copolymer.

4. A paper coating slip as claimed in claim 2 or 3, wherein the graft copolymer is prepared by free-radical polymerization of the monomers a) and, if used, b), c) and d) in the presence of the graft base.

5. A paper coating slip as claimed in any of claims 1 to 4, wherein said copolymer has the following overall composition:
10-80% by weight of monomers a)
10-90% by weight of monomers b)
0-10% by weight of monomers c)
0-10% by weight of monomers d).

6. A paper coating slip as claimed in any of claims 1 to 5, wherein said monomers a) comprise styrene, acrylonitrile or n-butyl acrylate.

7. Paper coated with a paper coating slip as claimed in any of claims 1 to 6.

8. A process for printing paper, which comprises printing paper as claimed in claim 7.

9. A process as claimed in claim 8, which is an offset printing process.

## Revendications

1. Masses d'enduction de papier, contenant, comme liant, un copolymère à base
de 10 à 99,5 % en poids de monomères principaux a) choisis parmi des (méth)acrylates d'alkyle en C₁-C₂₀, des esters vinyliques d'acides carboxyliques contenant jusqu'à 20 atomes de C, des substances vinylaromatiques comprenant jusqu'à 20 atomes de carbone, des nitriles éthyléniquement insaturés, des halogénures de vinyle, des éthers vinyliques ou des éthers allyliques d'alcools contenant de 1 à 10 atomes de C, des hydrocarbures aliphatiques à 2 jusqu'à 8 atomes de C et à une ou deux doubles liaisons, ou des mélanges de ces monomères,
de 0,5 à 90 % en poids de monomères b) répondant aux formules 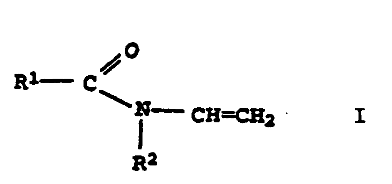 ou 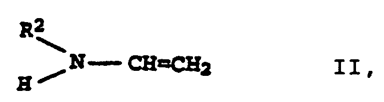 dans lesquelles R¹ et R² représentent, indépendamment l'un de l'autre, de l'hydrogène ou un groupe alkyle en C₁-C₆,
de 0 à 10 % en poids d'anhydrides ou d'acides éthyléniquement insaturés ou d'amides différents de b), comme c),
de 0 à 30 % en poids d'autres monomères d).

2. Masses d'enduction de papier suivant la revendication 1, **caractérisée en ce que**, en ce qui concerne le copolymère, il s'agit d'un produit de copolymérisation par greffage, dans lequel la base de greffage polymère est constituée d'au moins 5 % en poids de monomères b).

3. Masses d'enduction de papier suivant l'une des revendications 1 et 2, **caractérisées en ce que** la fraction pondérale de la base de greffage sur le copolymère entier est de 10 à 90 % en poids, par rapport au copolymère.

4. Masses d'enduction de papier suivant l'une des revendications 2 et 3, **caractérisées en ce que** le copolymère de greffage est préparé par polymérisation radicalaire des monomères a) et éventuellement b), c) et d), en présence de la base de greffage.

5. Masses d'enduction de papier suivant l'une des revendications 1 à 4, **caractérisées en ce que** le copolymère est au total constitué de :
10-80 % en poids de monomères a),
10-90 % en poids de monomères b),
0-10 % en poids de monomères c),
0-10 % en poids de monomères d).

6. Masses d'enduction de papier suivant l'une des revendications 1 à 5, **caractérisées en ce que**, en ce qui concerne les monomères a), il s'agit de styrène, d'acrylonitrile ou d'acrylate de n-butyle.

7. Papiers, enduits d'une masse d'enduction de papier suivant l'une des revendications 1 à 6.

8. Procédé d'impression de papiers, **caractérisé en ce que** des papiers suivant la revendication 7 sont imprimés.

9. Procédé suivant la revendication 8, **caractérisé en ce qu'**il s'agit d'un procédé d'impression offset.
